# EUROPÄISCHE PATENTANMELDUNG

(11) **EP 1 073 023 A2**
(43) Veröffentlichungstag der Anmeldung: **31.01.2001**
(21) Anmeldenummer: 00440214.5
(22) Anmeldetag: 18.07.2000
(51) Int. Cl.: G07F 7/10

(54) **Verfahren zur Abgabe einer Ware oder zum Erbringen einer Dienstleistung unter Einsatz eines Mobilfunk-Endgeräts; Mobilfunk-Endgerät zur Durchführung des Verfahrens und Einrichtung zur Abgabe einer Ware oder zum Erbringen einer Dienstleistung**

(30) Priorität: 26.07.1999 DE 19934981
(71) Anmelder: ALCATEL, 75008 Paris (FR)
(72) Erfinder: Hägebarth, Frank, 74366 Kirchheim (DE)
(74) Vertreter: Dreiss, Fuhlendorf, Steimle & Becker, Patentanwälte

(57) **Zusammenfassung**

Die Erfindung betrifft ein Verfahren zur Abgabe einer Ware oder zum Erbringen einer Dienstleistung unter Einsatz eines Mobilfunk-Endgeräts (6). Es wird ein vereinfachtes Verfahren vorgeschlagen, das gekennzeichnet is durch die nachfolgenden Schritte:
- Herstellen einer ersten Kommunikationsverbindung (7) zwischen einer Einrichtung (1) zur Abgabe einer Ware oder zum Erbringen einer Dienstleistung und dem Mobilfunk-Endgerät (6) über eine räumlich eng begrenzte Übertragungsstrecke (8);
- Herstellen einer zweiten Kommunikationsverbindung (9) zwischen dem Mobilfunk-Endgerät (6) und einem Diensterechner (5) eines Mobilfunk-Telekommunikations-Netzwerks über eine Mobilfunk-Übertragungsstrecke (10) ;
- Auswahl einer gewünschten Ware oder Dienstleistung;
- Abgabe der ausgewählten Ware oder Erbringen der ausgewählten Dienstleistung durch die Einrichtung (1); und
- Abrechnen des Kaufbetrags für die ausgewählte Ware oder Dienstleistung zwischen der Einrichtung (1) und dem Diensterechner (5) über die Kommunikationsverbindungen (7, 9).

## Beschreibung

Die vorliegende Erfindung betrifft ein Verfahren zur Abgabe einer Ware oder zum Erbringen einer Dienstleistung unter Einsatz eines Mobilfunk-Endgeräts. Die Erfindung bezieht sich auch auf ein Mobilfunk-Endgerät zum Einsatz als Mittel zur Abgabe einer Ware oder zum Erbringen einer Dienstleistung. Schließlich betrifft die vorliegende Erfindung auch eine Einrichtung zur Abgabe einer Ware oder zum Erbringen einer Dienstleistung unter Einsatz eines Mobilfunk-Endgeräts.

Aus dem Stand der Technik sind verschiedene Verfahren der eingangs genannten Art bekannt. Derartige Verfahren finden in letzter Zeit zunehmend Verbreitung, da durch den Einsatz eines Mobilfunk-Endgeräts die Bezahlung der abgegebenen Ware oder der erbrachten Dienstleistung bargeldlos und ohne den Einsatz besonderer Zahlungsmittel, beispielsweise Scheckkarten oder Kreditkarten, über die Mobilfunk-Telefonrechnung des Benutzers des Mobilfunk-Endgeräts erfolgen kann.

In der Zeitschrift "Mobilfunk Inside", Nr. 40, August 1998, Seite 1, herausgegeben von der MobilCom GmbH, Schleswig, DE, werden ein Verfahren und eine Einrichtung zur Abgabe einer Ware unter Einsatz eines Mobilfunk-Endgeräts beschrieben. Es wird ein Getränkeautomat offenbart, der an ein Telekommunikationsnetzwerk angeschlossen ist. Um dem Getränkeautomaten ein bestimmtes Getränke entnehmen zu können, muss mittels eines Mobiltelefons eine bestimmte mehrstellige Telefonnummer gewählt werden. Die ersten Stellen dieser Telefonnummer kennzeichnen den Getränkeautomaten. Die letzten Stellen der Telefonnummer werden in Abhängigkeit von dem gewünschten Getränk gewählt. Der Telefonanruf wird über das Telekommunikationsnetzwerk an den Getränkeautomaten geleitet, der in Abhängigkeit von den letzten Stellen der Telefonnummer das ausgewählte Getränk ausgibt. Der für das ausgewählte Getränk fällige Kaufbetrag wird über die Mobiltelefonrechnung des Benutzers des Mobiltelefons abgerechnet.

In derselben Zeitschrift "Mobilfunk Inside", a.a.O., werden auch ein Verfahren und eine Einrichtung zum Erbringen einer Dienstleistung beschrieben. Es wird eine Waschstraße für Kraftfahrzeuge offenbart, die ebenfalls an ein Telekommunikationsnetzwerk angeschlossen ist. Ein Autofahrer, der sein Fahrzeug in der Waschstraße waschen lassen möchte, muss lediglich vor die Waschstraße fahren und über sein Mobiltelefon eine mehrstellige Telefonnummer anwählen. Die ersten Stellen der Telefonnummer kennzeichnen die Waschstraße, mit den letzten Stellen der gewählten Telefonnummer wählt der Autofahrer das von ihm gewünschte Waschprogramm aus. Die Abrechnung dieser erbrachten Dienstleistung erfolgt ebenfalls über die Mobilfunk-Telefonrechnung des Benutzers des Mobiltelefons.

In der Ausgabe Nr. 35, März 1998, der Zeitschrift "Mobilfunk Inside", herausgegeben von der MobilCom GmbH, Schleswig, DE, wird ein Verfahren beschrieben, die Parkgebühr für ein Kraftfahrzeug unter Einsatz eines Mobiltelefons zu bezahlen. Wenn der Autofahrer sein Kraftfahrzeug in einer gebührenpflichtigen Parkzone abstellt, ruft er über ein Mobiltelefon bei einer "Phone-Park-Zentrale" an und gibt eine Kennnummer der Parkzone ein, in der er sein Kraftfahrzeug abgestellt hat. Durch den Anruf wird in der "Phone-Park-Zentrale" ein Gebührenzähler aktiviert. Bei der Rückkehr des Autofahrers zu seinem Kraftfahrzeug kann er durch einen erneuten Anruf bei der "Phone-Park-Zentrale" den Gebührenzähler anhalten. Die Abrechnung der fälligen Parkgebühr erfolgt über die Mobiltelefon-Rechnung des Benutzers des Mobiltelefons.

Die bekannten Verfahren haben jedoch den Nachteil, dass die Einrichtung zur Abgabe einer Ware oder zum Erbringen einer Dienstleistung, in den oben genannten Beispielen der Getränkeautomat oder die Waschstraße, mit einem eigenen Anschluss an ein Telekommunikations-Netzwerk ausgestattet sein müssen. Zum Anschluss der Einrichtung an das Telekommunikations-Netzwerk müssen entweder entsprechende Telekommunikationsleitungen oder Funkverbindungen vorhanden sein. Neben der erforderlichen Infrastruktur bedarf es außerdem entsprechender Hardware in der Einrichtung selbst, durch die die Verbindung zu dem Telekommunikations-Netzwerk aufgebaut, überwacht und dann wieder abgebaut wird. Die Bereitstellung der für den Anschluss der Einrichtung an ein Telekommunikations-Netzwerk notwendigen Infrastruktur kann sehr aufwendig und teuer sein. Die Hardware in den Einrichtungen zum Aufbau, zur Überwachung und zum Abbau der Verbindung zu dem Telekommunikations-Netzwerk ist relativ aufwendig, groß bauend und teuer. Für den Benutzer des Mobiltelefons ergibt sich zusätzlich der Nachteil, dass durch das Anwählen der Einrichtung zur Abgabe einer Ware oder zum Erbringen einer Dienstleistung Telefongebühren in der Regel anfallen, für die der Benutzer des Mobiltelefons aufkommen muss. Diese Nachteile haben dazu geführt, dass sich das Verfahren der eingangs genannten Art trotz der grundsätzlich äußerst vorteilhaften Idee der Abgabe einer Ware oder des Erbringens einer Dienstleistung unter Einsatz eines Mobilfunk-Endgeräts in der Praxis bisher nicht durchgesetzt hat und auch in Zukunft wohl eher die Ausnahme bleiben wird.

Aus den vorgenannten Nachteilen des Standes der Technik ergibt sich somit eine Aufgabe der vorliegenden Erfindung, ein Verfahren der eingangs genannten Art zu vereinfachen.

Zur Lösung dieser Aufgabe schlägt die Erfindung ein Verfahren der eingangs genannten Art vor, das gekennzeichnet ist durch die nachfolgenden Schritte:
- Herstellen einer ersten Kommunikationsverbindung zwischen einer Einrichtung zur Abgabe einer Ware oder zum Erbringen einer Dienstleistung und dem Mobilfunk-Endgerät über eine räumlich eng begrenzte Übertragungsstrecke;
- Herstellen einer zweiten Kommunikationsverbindung zwischen dem Mobilfunk-Endgerät und einem Diensterechner eines Mobilfunk-Telekommunikations-Netzwerks über eine Mobilfunk-Übertragungsstrecke;
- Auswahl einer gewünschten Ware oder Dienstleistung;
- Abgabe der ausgewählten Ware oder Erbringen der ausgewählten Dienstleistung durch die Einrichtung; und
- Abrechnen des Kaufbetrags für die ausgewählte Ware oder Dienstleistung zwischen der Einrichtung und dem Diensterechner über die Kommunikationsverbindungen.

Erfindungsgemäß wird in vorteilhafter Weise für die Kommunikationsverbindung zwischen der Einrichtung zur Abgabe einer Ware oder zum Erbringen einer Dienstleistung und dem Diensterechner eines Telekommunikations-Netzwerks die Fähigkeit eines Mobilfunk-Endgeräts ausgenutzt, seinerseits eine Kommunikationsverbindung zu dem Diensterechner des Mobilfunk-Telekommunikations-Netzwerks aufzubauen. Dazu muss lediglich eine weitere Kommunikationsverbindung zwischen der Einrichtung zur Abgabe einer Ware oder zum Erbringen einer Dienstleistung und dem Mobilfunk-Endgerät hergestellt werden. Die Einrichtung selbst benötigt somit keinen eigenen Anschluss zu einem Telekommunikations-Netzwerk.

Als Mobilfunk-Endgeräte kommen insbesondere Mobiltelefone zum Einsatz. Es ist jedoch daran gedacht, auch andersartig ausgebildete Mobilfunk-Endgeräte, beispielsweise Rechner mit einer Schnittstelle zu einem Mobilfunk-Telekommunikations-Netzwerk, einzusetzen.

Die erste Kommunikationsverbindung wird über eine räumlich eng begrenzte Übertragungsstrecke hergestellt. Zwischen der Einrichtung zur Abgabe einer Ware oder zum Erbringen einer Dienstleistung und dem Mobilfunk-Endgerät wird also eine Punkt-zu-Punkt-Verbindung innerhalb eines sogenannten PICO-Netzwerks, also in einem räumlich eng begrenzten Netzwerk, errichtet. Die Datenübertragung über die erste Kommunikationsverbindung kann auf nahezu beliebige Weise erfolgen. Die Datenübertragungsrate kann auch relativ gering sein, da nur sehr begrenzte Datenmengen zwischen der Einrichtung zur Abgabe einer Ware oder zur Erbringung einer Dienstleistung und dem Mobilfunk-Endgerät übermittelt werden müssen. Außerdem ist es denkbar, in dem Mobilfunk-Endgerät geeignete Speichermittel vorzusehen, um mit einer niedrigen Datenübertragungsrate von der Einrichtung an das Mobilfunk-Endgerät übermittelte Daten zwischenzuspeichern und dann mit einer höheren Datenrate über die zweite Kommunikationsverbindung an den Diensterechner weiterzuleiten. Ebenso könnten mit einer hohen Datenrate von dem Diensterechner an das Mobilfunk-Endgerät übermittelte Daten in den Speichermitteln des Mobilfunk-Endgeräts zwischengespeichert und nach und nach mit einer niedrigen Datenrate an die Einrichtung weitergeleitet werden.

Die Beschränkung der ersten Kommunikationsverbindung auf eine räumlich eng begrenzte Übertragungsstrecke hat den Vorteil, dass der technische und damit auch der finanzielle Aufwand für eine solche Kommunikationsverbindung sehr gering ist. Außerdem kann die Belastung der Umwelt durch sogenannten Elektrosmog, d.h. die Belastung der Umwelt insbesondere durch elektromagnetische Wellen, auf ein Minimum reduziert werden. Die Beschränkung der Übertragungsstrecke auf einen räumlich eng begrenzten Bereich stellt keine Einschränkung der Funktionsfähigkeit des erfindungsgemäßen Verfahrens dar, da sich der Benutzer des Mobilfunk-Endgeräts zur Entgegennahme der abgegebenen Ware oder der erbrachten Dienstleistung sowieso in unmittelbarer Nähe zu der Einrichtung zur Abgabe der Ware oder zum Erbringen der Dienstleistung befindet.

Die zweite Kommunikationsverbindung zwischen dem Mobilfunk-Endgerät und dem Diensterechner eines Mobilfunk-Telekommunikations-Netzwerks wird über eine Mobilfunk-Übertragungsstrecke hergestellt. Dazu wird der Diensterechner in an sich bekannter Art und Weise von dem Mobilfunk-Endgerät angewählt. Mit dem Anruf wird auch eine Benutzerkennung, beispielsweise die Telefonnummer des Mobilfunk-Endgeräts, an den Diensterechner übermittelt.

Anhand der Benutzerkennung ist der Diensterechner in der Lage, den Benutzer des Mobilfunk-Endgeräts zu identifizieren. Die Abrechnung des Kaufbetrags für eine abgegebene Ware oder eine erbrachte Dienstleistung erfolgt über den Diensterechner. Der Diensterechner hat Zugriff auf persönliche Daten des Benutzers des Mobilfunk-Endgeräts und auf die Daten der Mobilfunk-Telefonrechnung des Benutzers. Vor der Abgabe einer Ware oder vor dem Erbringen einer Dienstleistung können Informationen zwischen der Einrichtung und dem Diensterechner ausgetauscht werden. So kann beispielsweise die Kreditwürdigkeit des Benutzers, oder das Erreichen eines bestimmten Kreditlimits überprüft werden.

Die Auswahl einer gewünschten Ware oder Dienstleistung kann auf unterschiedliche Weise erfolgen. Sie kann entweder über das Mobilfunk-Endgerät oder direkt an der Einrichtung zur Abgabe einer Ware oder zum Erbringen einer Dienstleistung erfolgen. Es ist des Weiteren denkbar, dass von dem Benutzer des Mobilfunk-Endgeräts vor der Durchführung des erfindungsgemäßen Verfahrens eine Vorauswahl für bestimmte Waren oder Dienstleistungen getroffen und in dem Diensterechner abgespeichert wird. Diese Vorauswahl kann beispielsweise darin bestehen, dass jedesmal, wenn der Benutzer an einer Einrichtung zur Abgabe von Kraftstoff für Kraftfahrzeuge vorfährt, stets derselbe Kraftstofftyp ausgewählt wird, dass jedesmal, wenn der Benutzer an eine Einrichtung zur Abgabe von Getränken in seinem Stammlokal herantritt, stets das bevorzugte Getränk abgegeben wird oder dass jedesmal, wenn der Benutzer zu einer Einrichtung zur Abgabe von Zeitungen und Zeitschriften geht, stets die bevorzugten Zeitungen und Zeitschriften abgegeben werden. Selbstverständlich ist es möglich, die Voreinstellungen in Einzelfällen durch gezielte Auswahl einer anderen als der vorher ausgewählten Ware oder Dienstleistung zu korrigieren.

Die ausgewählte Ware oder Dienstleistung wird dann durch die Einrichtung abgegeben bzw. erbracht und der entsprechende Kaufpreis zwischen der Einrichtung und dem Diensterechner über die Kommunikationsverbindungen abgerechnet. Es ist denkbar, dass die Ware oder Dienstleistung erst dann abgegeben bzw. erbracht wird, wenn die Abrechnung des Kaufbetrags erfolgreich durchgeführt wurde. Die erfolgreiche Abrechnung des Kaufbetrags kann der Einrichtung zur Abgabe einer Ware oder zum Erbringen einer Dienstleistung von dem Diensterechner bestätigt werden. Es ist des Weiteren denkbar, dass der Kaufbetrag dem Benutzer angegeben wird, beispielsweise durch Anzeige auf einem Bildschirm des Mobilfunk-Endgeräts. Erst nach einer Bestätigung des Kaufbetrags durch den Benutzer wird der Kaufbetrag abgerechnet. Der Kaufbetrag für die abgegebene Ware oder die erbrachte Dienstleistung wird dem Benutzer des Mobilfunk-Endgeräts mit der Mobilfunk-Rechnung in Rechnung gestellt.

Da der Benutzer eines Mobilfunk-Endgeräts nur dann in einem Mobilfunk-Telekommunikations-Netzwerk als Teilnehmer aufgenommen wird, wenn eine Überprüfung der Identität des Benutzers erfolgreich durchgeführt wurde, verfügt das erfindungsgemäße Verfahren an sich bereits über einen sehr hohen Sicherheitsstandard. Auf eine zusätzliche Überprüfung der Identität des Benutzers des Mobilfunk-Endgeräts im Rahmen des erfindungsgemäßen Verfahrens, also für die Abwicklung eines elektronischen Zahlungsvorgangs, kann deshalb verzichtet werden. Zur Erhöhung der Sicherheit bei elektronischen Zahlungsvorgängen ist es jedoch denkbar, dass im Rahmen des vorliegenden Verfahrens eine zusätzliche Überprüfung der Identität des Benutzers des Mobilfunk-Endgeräts durchgeführt wird. Die Überprüfung der Identität des Benutzers kann beispielsweise durch Eingabe einer sogenannten Personal-Identification-Number (PIN) über das Mobilfunk-Endgerät und durch Verifikation der PIN über den Diensterechner erfolgen.

Das erfindungsgemäße Verfahren eignet sich für eine Vielzahl unterschiedlicher elektronischer Zahlungsvorgänge. So ist es sogar denkbar, nach dem erfindungsgemäßen Verfahren Bargeld von Geldausgabeautomaten abzuheben. Der Geldausgabeautomat würde dann über die räumlich eng begrenzte Übertragungsstrecke die erste Kommunikationsverbindung zu dem Mobilfunk-Endgerät und von diesem dann weiter über die Mobilfunk-Übertragungsstrecke die zweite Kommunikationsverbindung zu dem Diensterechner aufbauen. Der Diensterechner ist entweder als ein zentraler Bankrechner ausgebildet, oder er stellt eine weitere Kommunikationsverbindung zu einem zentralen Bankenrechner her, um so die Identität des Benutzers des Mobilfunk-Endgeräts festzustellen, dessen Bonität zu prüfen und um dort die abgehobene Geldsumme zu verbuchen.

Für einen Benutzer eines Mobilfunk-Endgeräts hat das erfindungsgemäße Verfahren vor allem den Vorteil, dass bei einer entsprechenden Ausstattung der Einrichtungen zur Abgabe einer Ware oder zum Erbringen einer Dienstleistung sämtliche im täglichen Leben anfallenden Zahlungen nach diesem Verfahren durchgeführt werden können. Der Benutzer muss neben dem Mobilfunk-Endgerät keinerlei zusätzliche Zahlungsmittel mit sich führen. Außerdem erfolgen sämtliche Zahlungen über ein einziges Konto, nämlich das Mobilfunk-Rechnungskonto, und werden über eine einzige Rechnung, nämlich die Mobilfunk-Rechnung, abgerechnet. Dadurch wird dem Benutzer der Überblick über seine Finanzen, insbesondere über seine Ausgaben, erleichtert.

Es ist denkbar, dass der Benutzer des Mobilfunk-Endgeräts durch einfaches Anwählen einer bestimmten Telefonnummer den aktuellen Stand seines Mobilfunk-Rechnungskontos erfragen und sich die einzelnen Buchungen auf seinem Mobilfunk-Rechnungskonto entweder mündlich ansagen oder schriftlich zusenden lassen kann, beispielsweise als Short-Message-Service (SMS) oder als elektronische Nachricht (E-Mail).

Die nach dem erfindungsgemäßen Verfahren vorgenommenen Zahlungen weisen einen sehr hohen Sicherheitsstandard auf und sind diesbezüglich anderen bargeldlosen Zahlungsarten, z.B. Kreditkarte, EC-Karte oder wiederaufladbarer Geldkarte, weit überlegen. Das erfindungsgemäße Verfahren arbeitet sehr effizient und eignet sich somit auch für die Zahlung kleinerer Geldbeträge, die bisher entweder mit Bargeld oder mit Geldkarte entrichtet wurden.

Für den Handel bestehen die Vorteile des erfindungsgemäßen Verfahrens vor allem darin, dass er seine Einrichtungen zur Abgabe einer Ware oder zum Erbringen einer Dienstleistung nicht mehr, wie bisher, auf seine Kosten an ein Telekommunikations-Netzwerk anschließen muss. Nach dem erfindungsgemäßen Verfahren genügt es, wenn beispielsweise Kassen mit einer entsprechenden Schnittstelle zum Herstellen der ersten Kommunikationsverbindung über eine räumlich eng begrenzte Übertragungsstrecke ausgestattet sind. Die Kommunikation zwischen der Kasse und einem Diensterechner erfolgt dann über die erste Kommunikationsverbindung zu dem Mobilfunk-Endgerät und von dort über die Mobilfunk-Übertragungsstrecke der zweiten Kommunikationsverbindung zu dem Diensterechner.

Gemäß einer vorteilhaften Weiterbildung der vorliegenden Erfindung wird vorgeschlagen, dass die erste Kommunikationsverbindung zwischen der Einrichtung und dem Mobilfunk-Endgerät über eine akustische Übertragungsstrecke, beispielsweise eine Ultraschall-Übertragungsstrecke, hergestellt wird.

Gemäß einer anderen vorteilhaften Weiterbildung der Erfindung wird vorgeschlagen, dass die erste Kommunikationsverbindung zwischen der Einrichtung und dem Mobilfunk-Endgerät über eine optische Übertragungsstrecke, insbesondere über eine Infrarot (IR)-Übertragungsstrecke, hergestellt wird.

Gemäß noch einer anderen vorteilhaften Weiterbildung der Erfindung wird vorgeschlagen, dass die erste Kommunikationsverbindung zwischen der Einrichtung und dem Mobilfunk-Endgerät über eine Hochfrequenz (HF)-Übertragungsstrecke hergestellt wird. Eine HF-Übertragungsstrecke hat den Vorteil, dass über sie auch dann Daten übertragen werden können, wenn zwischen der Einrichtung und dem Mobilfunk-Endgerät keine direkte Verbindung (Line-of-Sight (LOS)-Verbindung) besteht. Hindernisse zwischen der Einrichtung und dem Mobilfunk-Endgerät können zwar zu einer Schwächung des HF-Signals führen, eine Datenübertragung über die HF-Übertragungsstrecke ist in der Regel jedoch nach wie vor möglich.

Gemäß einer bevorzugten Ausführungsform der vorliegenden Erfindung wird vorgeschlagen, dass die HF-Übertragungsstrecke nach dem Bluetooth-Standard arbeitet. Bei dem Bluetooth-Standard handelt es sich um einen relativ neuen Standard zur Übertragung von Daten über eine räumlich eng begrenzte Übertragungsstrecke mittels HF-Signalen. Nach dem derzeitigen Stand des Bluetooth-Standards werden die Daten mit einer Sendeenergie von 1 mW und einer Frequenz von 2,4 GHz übertragen. Um die Bluetooth-Verbindung möglichst robust aufzubauen und um Interferenz und Fading abzumildern, wird ein schnelles Frequency-Hopping durchgeführt. Die zu übertragenden Daten sind mit Schlüssellängen von bis zu 64 bit verschlüsselbar. Nähere Informationen über den Bluetooth-Standard können der Zeitschrift "Funkschau", Nr. 9, 1999, S. 34 - 38, WEKA, Fachzeitschriften-Verlag, Poing, sowie der Zeitschrift "F & M", Jahrgang 107 (1999), 6, S. 22 - 24, Carl Hanser Verlag, München, entnommen werden. Aktuelle Informationen über den Bluetooth-Standard können dem Internet auf der Seite http://www.bluetooth.com entnommen werden.

Schließlich wird gemäß einer anderen vorteilhaften Weiterbildung der vorliegenden Erfindung vorgeschlagen, dass die erste Kommunikationsverbindung zwischen der Einrichtung und dem Mobilfunk-Endgerät über eine induktive Übertragungsstrecke hergestellt wird.

Gemäß einer bevorzugten Ausführungsform der vorliegenden Erfindung wird vorgeschlagen, dass die gewünschte Ware oder Dienstleistung mittels Eingabemittel des Mobilfunk-Endgeräts über die erste Kommunikationsverbindung ausgewählt wird.

Gemäß einer anderen vorteilhaften Weiterbildung der vorliegenden Erfindung wird vorgeschlagen, dass vor der Abgabe der ausgewählten Ware oder vor dem Erbringen der ausgewählten Dienstleistung eine Identitätsprüfung des Benutzers des Mobilfunk-Endgeräts über das Mobilfunk-Endgerät in einer dem Mobilfunknetz üblichen Weise durchgeführt wird. So ist es beispielsweise denkbar, dass die Einrichtung zur Abgabe einer Ware oder zum Erbringen einer Dienstleistung nach dem Herstellen der ersten und zweiten Kommunikationsverbindung eine Zufallszahl generiert und an das Mobilfunk-Endgerät übermittelt. Das Mobilfunk-Endgerät leitet die Zufallszahl an den Diensterechner weiter, der aus der Zufallszahl eine neue Ziffernfolge berechnet. Zum Berechnen der Ziffernfolge aus der empfangenen Zufallszahl verwendet der Diensterechner einen bestimmten Rechenalgorithmus, der abhängig ist von einer abgespeicherten Kennung des Benutzers des Mobilfunk-Endgeräts. Die Ziffernfolge wird dann wieder von dem Diensterechner über das Mobilfunk-Endgerät zurück an die Einrichtung gesandt. Inzwischen hat auch die Einrichtung zur Abgabe einer Ware oder zum Erbringen einer Dienstleistung aus der generierten Zufallszahl nach einem Rechenalgorithmus, der abhängig ist von einer eingegebenen Benutzerkennung, eine Ziffernfolge berechnet. Die Einrichtung vergleicht nun die selbst berechnete Ziffernfolge mit der empfangenen Ziffernfolge. Bei einer Übereinstimmung der beiden Ziffernfolgen wird davon ausgegangen, dass die abgespeicherte und die eingegebene Benutzerkennung übereinstimmen. Die Identität des Benutzers wurde erfolgreich überprüft und der Auftrag des Benutzers des Mobilfunk-Endgeräts wird freigegeben, und die ausgewählte Ware wird abgegeben oder die ausgewählte Dienstleistung erbracht. Das beispielhaft beschriebene Verfahren einer Identitätsprüfung des Benutzers dient einer zusätzlichen Absicherung des Zahlungsvorgangs. Das Verfahren zur Identitätsprüfung arbeitet ähnlich wie die in Mobilfunk-Telekommunikations-Netzwerken eingesetzten Verfahren zur Authentifizierung des Benutzers eines Mobilfunk-Endgeräts.

Gemäß einer anderen vorteilhaften Weiterbildung der vorliegenden Erfindung wird vorgeschlagen, dass zum Abrechnen des Kaufbetrags für die abgegebene Ware oder die erbrachte Dienstleistung zwischen der Einrichtung und dem Diensterechner weitere Informationen bezüglich der ausgewählten Ware oder Dienstleistung von der Einrichtung über die Kommunikationsverbindungen an den Diensterechner übermittelt werden. Diese weiteren Informationen umfassen beispielsweise eine Produktnummer, eine Produktbezeichnung, eine Händlernummer oder einen Händlernamen. Die weiteren Informationen können in dem Diensterechner abgespeichert und bei Bedarf aufgerufen werden. So kann beispielsweise auf der Mobilfunk-Rechnung genau aufgeführt werden, was, wann, wo gekauft wurde. Die in dem Diensterechner abgelegten Informationen können zum Zwecke statistischer Auswertungen herangezogen werden.

Eine weitere Aufgabe der vorliegenden Erfindung besteht darin, ein Mobilfunk-Endgerät der eingangs genannten Art dahingehend auszugestalten und weiterzubilden, dass es im Rahmen des erfindungsgemäßen Verfahrens als Mittel zur Abgabe einer Ware oder zum Erbringen einer Dienstleistung eingesetzt werden kann.

Zur Lösung dieser Aufgabe schlägt die Erfindung ein Mobilfunk-Endgerät der eingangs genannten Art vor, das gekennzeichnet ist durch:
- erste Mittel zum Herstellen einer ersten Kommunikationsverbindung zwischen einer Einrichtung zur Abgabe einer Ware oder zum Erbringen einer Dienstleistung und dem Mobilfunk-Endgerät über eine räumlich eng begrenzte Übertragungsstrecke;
- zweite Mittel zum Herstellen einer zweiten Kommunikationsverbindung zwischen dem Mobilfunk-Endgerät und einem Diensterechner eines Mobilfunk-Telekommunikations-Netzwerks über eine Mobilfunk-Übertragungsstrecke; und
- dritte Mittel zum Empfang von Daten über die räumlich eng begrenzte Übertragungsstrecke und zum Weiterleiten der empfangenen Daten über die Mobilfunk-Übertragungsstrecke bzw. zum Empfang von Daten über die Mobilfunk-Übertragungsstrecke und zum Weiterleiten der empfangenen Daten über die räumlich eng begrenzte Übertragungsstrecke.

Gemäß einer vorteilhaften Weiterbildung der vorliegenden Erfindung weisen die ersten Mittel eine akustische Schnittstelle auf. Mit Hilfe dieser akustischen Schnittstelle wird eine akustische Übertragungsstrecke zwischen dem Mobilfunk-Endgerät und der Einrichtung hergestellt.

Gemäß einer anderen vorteilhaften Weiterbildung der vorliegenden Erfindung wird vorgeschlagen, dass die ersten Mittel eine optische Schnittstelle, insbesondere eine Infrarot (IR)-Schnittstelle, aufweisen. Mit Hilfe der optischen Schnittstelle kann eine optische Übertragungsstrecke und mit Hilfe der IR-Schnittstelle eine IR-Übertragungsstrecke hergestellt werden. Die IR-Übertragungsstrecke kann beispielsweise nach dem Infrared Data Association (IrDA)-Standard arbeiten. Bei dem IrDA-Standard handelt es sich um eine Spezifikation für drahtlose IR-Verbindungen, insbesondere zwischen PC und Peripherie. Die IR-Übertragungsstrecke kann jedoch auch nach dem erweiterten Advanced-InfraRed(AIR)-Standard arbeiten.

Gemäß noch einer anderen vorteilhaften Weiterbildung der vorliegenden Erfindung weisen die ersten Mittel eine Hochfrequenz (HF)-Schnittstelle auf, die insbesondere nach dem Bluetooth-Standard arbeitet.

Schließlich wird gemäß einer anderen vorteilhaften Weiterbildung der Erfindung vorgeschlagen, dass die ersten Mittel eine induktive Schnittstelle aufweisen.

Gemäß einer bevorzugten Ausführungsform der vorliegenden Erfindung wird vorgeschlagen, dass das Mobilfunk-Endgerät vierte Mittel zur Auswahl der Ware oder der Dienstleistung über die erste Kommunikationsverbindung aufweist. Über diese vierten Mittel kann von dem Mobilfunk-Endgerät aus die gewünschte Ware oder Dienstleistung ausgewählt werden. Auf entsprechende Auswahlmittel an der Einrichtung zur Abgabe einer Ware oder zum Erbringen einer Dienstleistung kann somit verzichtet werden. Die Einrichtung benutzt gemäß dieser Ausführungsform das Mobilfunk-Endgerät zum einen, um eine Kommunikationsverbindung zu dem Diensterechner eines Mobilfunk-Telekommunikations-Netzwerks herzustellen, und zum anderen, um eine Auswahl bezüglich der gewünschten Ware oder Dienstleistung zu treffen. Dadurch können die Einrichtungen zur Abgabe einer Ware oder zum Erbringen einer Dienstleistung besonders einfach, kostengünstig und wenig wartungsintensiv ausgebildet werden. Auf der anderen Seite bedeutet es für die Mobilfunk-Endgeräte keinen zusätzlichen Aufwand, da sie bereits über geeignete Mittel verfügen, die als Auswahlmittel eingesetzt werden können.

Vorteilhafterweise sind die vierten Mittel als eine Wähl-/ Bedientastatur des Mobilfunk-Endgeräts ausgebildet. Alternativ wird vorgeschlagen, dass die vierten Mittel als ein berührungssensitiver Bildschirm des Mobilfunk-Endgeräts ausgebildet sind. Um dem Benutzer des Mobilfunk-Endgeräts die Auswahl einer bestimmten Ware oder Dienstleistung zu erleichtern, ist es denkbar, dass die Einrichtung über die erste Kommunikationsverbindung dem Mobilfunk-Endgerät Informationen über zur Verfügung stehende Waren oder Dienstleistungen übermittelt. Diese Informationen können dann auf dem Bildschirm des Mobilfunk-Endgeräts angezeigt werden. Wenn das Mobilfunk-Endgerät über einen berührungssensitiven Bildschirm verfügt, kann der Benutzer die gewünschten Waren oder Dienstleistungen durch einfaches Berühren der auf dem Bildschirm dargestellten Informationen auswählen. Andernfalls kann der Benutzer seine Auswahl über die Wähl-/ Bedientastatur des Mobilfunk-Endgeräts treffen.

Gemäß einer bevorzugten Weiterbildung der vorliegenden Erfindung ist das Mobilfunk-Endgerät als ein Mobiltelefon ausgebildet. Es ist jedoch auch denkbar, dass das Mobilfunk-Endgerät als ein Organizer oder als ein PC, vorzugsweise als ein tragbarer PC, ausgebildet ist, der über eine Schnittstelle zu einem Mobilfunk-Telekommunikations-Netzwerk verfügt.

Schließlich ist es eine Aufgabe der vorliegenden Erfindung, eine Einrichtung der eingangs genannten Art dahingehend auszugestalten und weiterzubilden, dass unter Einsatz eines Mobilfunk-Endgeräts auf möglichst einfache Weise Waren abgegeben oder Dienstleistungen erbracht werden können.

Zur Lösung dieser Aufgabe schlägt die Erfindung eine Einrichtung der eingangs genannten Art vor, die gekennzeichnet ist durch:
- fünfte Mittel zum Herstellen einer ersten Kommunikationsverbindung zwischen der Einrichtung und dem Mobilfunk-Endgerät über eine räumlich eng begrenzte Übertragungsstrecke;
- sechste Mittel zur Abgabe einer ausgewählten Ware oder zum Erbringen einer ausgewählten Dienstleistung; und
- siebte Mittel zum Abrechnen des Kaufbetrags für die ausgewählte Ware oder Dienstleistung zwischen der Einrichtung und einem Diensterechner eines Mobilfunk-Telekommunikations-Netzwerks über das Mobilfunk-Endgerät.

Gemäß einer vorteilhaften Weiterbildung der vorliegenden Erfindung wird vorgeschlagen, dass die fünften Mittel eine akustische Schnittstelle aufweisen. Gemäß einer anderen vorteilhaften Weiterbildung weisen die fünften Mittel eine optische Schnittstelle, vorzugsweise eine Infrarot (IR)-Schnittstelle, auf. Des Weiteren wird vorgeschlagen, dass die fünften Mittel eine Hochfrequenz (HF)-Schnittstelle aufweisen, die vorzugsweise nach dem Bluetooth-Standard arbeitet. Schließlich schlägt die Erfindung vor, dass die fünften Mittel eine induktive Schnittstelle aufweisen.

Gemäß einer bevorzugten Ausführungsform der vorliegenden Erfindung wird vorgeschlagen, dass die Einrichtung achte Mittel zum Übermitteln weiterer Informationen bezüglich der ausgewählten Ware oder Dienstleistung von der Einrichtung über das Mobilfunk-Endgerät an den Diensterechner aufweist.

Schließlich wird vorgeschlagen, dass die Einrichtung neunte Mittel zum Steuern des Ablaufs des Verfahrens nach einem der Ansprüche 1 bis 10 aufweist.

Ein bevorzugtes Ausführungsbeispiel der vorliegenden Erfindung wird anhand der Zeichnungen näher erläutert. Es zeigen:
- Fig. 1: ein erfindungsgemäßes Verfahren gemäß einer bevorzugten Ausführungsform in schematischer Darstellung; und
- Fig. 2: das erfindungsgemäße Verfahren aus Fig. 1 in einem Ablaufdiagramm.

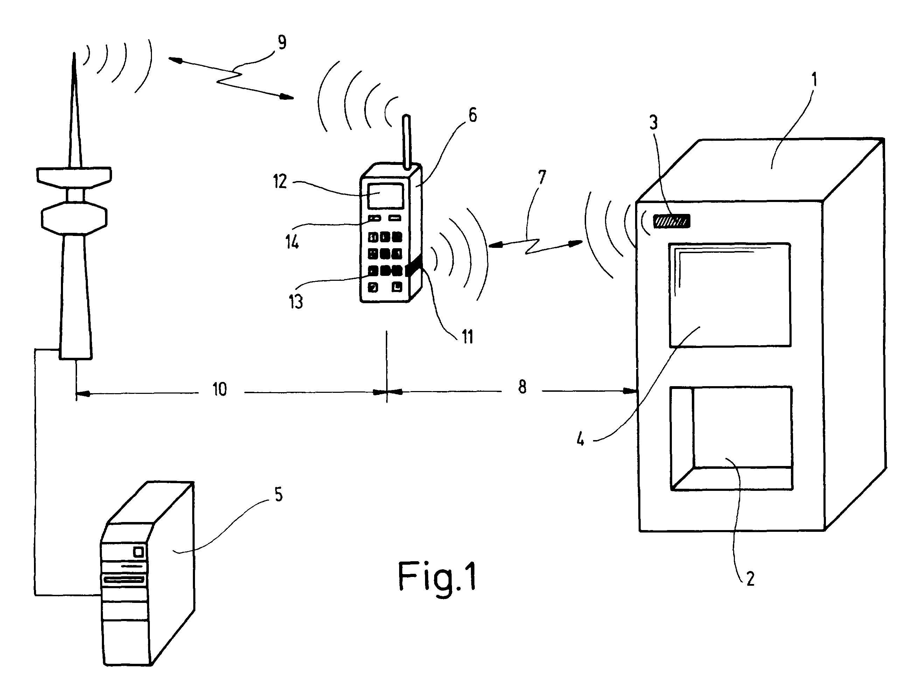

In Fig. 1 ist ein erfindungsgemäßes Verfahren zur Abgabe einer Ware oder zum Erbringen einer Dienstleistung gemäß einer bevorzugten Ausführungsform schematisch dargestellt.

Zur Durchführung des Verfahrens ist eine Einrichtung 1 zur Abgabe einer Ware oder zum Erbringen einer Dienstleistung vorgesehen. Die in Fig. 1 dargestellte Einrichtung 1 ist als ein Getränkeautomat ausgebildet, der ein Auswurffach 2 aufweist, über das ein ausgewähltes Getränk abgegeben wird. Die Einrichtung 1 weist außerdem eine optische Schnittstelle 3 auf, die als eine Infrarot (IR)-Schnittstelle ausgebildet ist. Auf einem Bildschirm 4 der Einrichtung 1 können die angebotenen Getränke oder andere Informationen angezeigt werden.

Zur Durchführung des erfindungsgemäßen Verfahrens ist des Weiteren ein Diensterechner 5 vorgesehen. Der Diensterechner 5 ist Teil eines Mobilfunk-Telekommunikations-Netzwerks und hat Zugriff auf Informationen über Teilnehmer des Mobilfunk-Telekommunikations-Netzwerks und auf deren Mobilfunk-Rechnungskonten. Die Einrichtung 1 stellt zum Abrechnen des Kaufbetrags für eine abgegebene Ware oder eine erbrachte Dienstleistung eine Kommunikationsverbindung zu dem Diensterechner 5 her. Der Kaufbetrag wird dann über den Diensterechner 5 einem bestimmten Teilnehmer des Mobilfunk-Telekommunikations-Netzwerks in Rechnung gestellt und erscheint auf seiner Mobilfunk-Abrechnung.

Schließlich ist zur Durchführung des erfindungsgemäßen Verfahrens ein Mobilfunk-Endgerät 6 vorgesehen, das als ein Mobilfunk-Telefon ausgebildet ist. Über das Mobilfunk-Endgerät 6 wird gemäß der vorliegenden Erfindung die Kommunikationsverbindung zwischen der Einrichtung 1 und dem Diensterechner 5 hergestellt. Die Kommunikationsverbindung ist zweigeteilt und besteht aus einer ersten Kommunikationsverbindung 7 über eine räumlich eng begrenzte Übertragungsstrecke 8 und aus einer zweiten Kommunikationsverbindung 9 über eine Mobilfunk-Übertragungsstrecke 10. Die räumlich eng begrenzte Übertragungsstrecke 8 ist als eine IR-Übertragungsstrecke ausgebildet und reicht über Entfernungen von bis zu mehreren zehn Zentimetern. Die Mobilfunk-Übertragungsstrecke 10 reicht über Entfernungen von mehreren hundert Metern.

Das Mobilfunk-Endgerät 6 weist eine optische Schnittstelle 11 auf, die als eine IR-Schnittstelle ausgebildet ist. Die erste Kommunikationsverbindung 7 wird zwischen der IR-Schnittstelle 3 der Einrichtung 1 und der IR-Schnittstelle 11 des Mobilfunk-Endgeräts 6 hergestellt.

Die erste Kommunikationsverbindung 7 kann außer über die IR-Übertragungsstrecke 8 auch über eine akustische Übertragungsstrecke, eine induktive Übertragungsstrecke oder über eine Hochfrequenz (HF)-Übertragungsstrecke erfolgen. Es ist insbesondere an solche HF-Übertragungsstrecken gedacht, die nach dem Bluetooth-Standard arbeiten.

Das Mobilfunk-Endgerät 6 weist einen Bildschirm 12 auf, auf dem beispielsweise die in der Einrichtung 1 zur Verfügung stehenden Getränke oder der zu entrichtende Kaufbetrag angezeigt werden können. Das Mobilfunk-Endgerät weist außerdem eine Wähltastatur 13 und eine Bedientastatur 14 in Form von Funktionstasten auf. Die Wähltastatur 13 kann ebenfalls zum Bedienen des Mobilfunk-Endgeräts 6 eingesetzt werden. Über die Wähl-/ Bedientastatur 13, 14 kann das gewünschte Getränk ausgewählt werden. Die getroffene Auswahl wird dann über die erste Kommunikationsverbindung 7 von dem Mobilfunk-Endgerät 6 an die Einrichtung 1 übermittelt.

Die zweite Kommunikationsverbindung 9 wird in an sich bekannter Weise über die Mobilfunk-Übertragungsstrecke 10 hergestellt, indem das Mobilfunk-Endgerät 6 eine Telefonnummer des Diensterechners 5 anwählt und eine Kommunikationsverbindung aufgebaut wird.

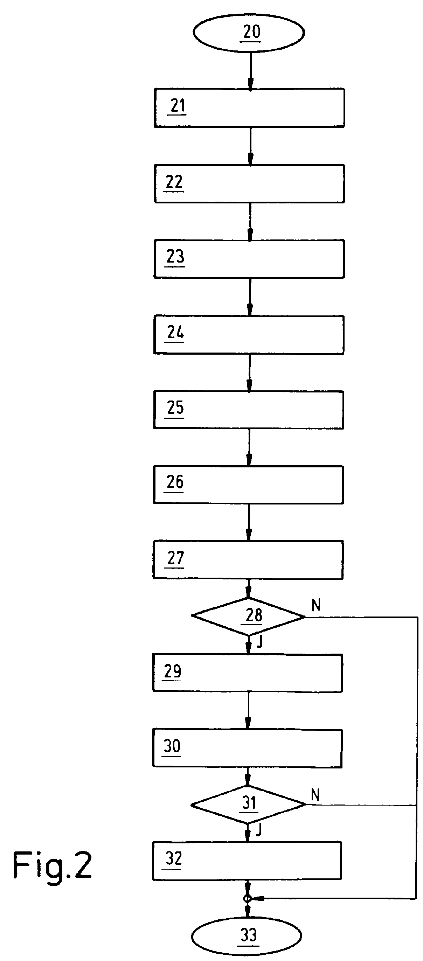

Das erfindungsgemäße Verfahren wird nun anhand des Ablaufdiagramms aus Fig. 2 näher erläutert. Das Verfahren beginnt bei Funktionsblock 20 entweder automatisch, sobald das Mobilfunk-Endgerät 6 in die Nähe der Einrichtung 1 zur Abgabe einer Ware oder zum Erbringen einer Dienstleistung kommt, oder manuell durch Betätigen einer Taste der Wähl-/ Bedientastatur 13, 14 oder einer speziell vorgesehenen Taste des Mobilfunk-Endgeräts 6 oder einer speziell vorgesehenen Taste der Einrichtung 1. Als nächstes wird die erste Kommunikationsverbindung 7 zwischen der Einrichtung 1 und dem Mobilfunk-Endgerät 6 in dem Funktionsblock 21 hergestellt. Anschließend wird in dem Funktionsblock 22 die zweite Kommunikationsverbindung 9 zwischen dem Mobilfunk-Endgerät und dem Diensterechner 5 des Mobilfunk-Telekommunikations-Netzwerks hergestellt. Der Aufbau der ersten und zweiten Kommunikationsverbindung 7; 9 kann auch in umgekehrter Reihenfolge oder sogar gleichzeitig erfolgen.

In einem anschließenden Funktionsblock 23 wird das Angebot an Waren oder Dienstleistungen von der Einrichtung 1 über die erste Kommunikationsverbindung 7 an das Mobilfunk-Endgerät 6 übermittelt. In einem Funktionsblock 24 wird das Angebot der Einrichtung 1 auf dem Bildschirm 12 des Mobilfunk-Endgeräts 6 angezeigt. Dann trifft der Benutzer des Mobilfunk-Endgeräts 6 in Funktionsblock 25 eine Auswahl der gewünschten Ware oder Dienstleistung. Im vorliegenden Ausführungsbeispiel wählt der Benutzer ein gewünschtes Getränk aus. Die Auswahl erfolgt entweder über die Wähl-/ Bedientastatur 13, 14 oder über den Bildschirm 12 des Mobilfunk-Endgeräts 6, falls dieser als ein berührungssensitiver Bildschirm ausgebildet ist. Es ist auch denkbar, dass die Auswahl des gewünschten Getränks über eine entsprechende Tastatur (nicht dargestellt) unmittelbar an der Einrichtung 1 durchgeführt wird.

Falls die Auswahl des gewünschten Getränks an dem Mobilfunk-Endgerät 6 vorgenommen wurde, wird in einem Funktionsblock 26 die getroffene Auswahl von dem Mobilfunk-Endgerät 6 über die erste Kommunikationsverbindung 7 an die Einrichtung 1 übermittelt.

In einem anschließenden Funktionsblock 27 führt die Einrichtung 1 einen Abgleich personenbezogener Daten des Benutzers des Mobilfunk-Endgeräts 6 durch. Dazu wird die Telefonnummer des Mobilfunk-Endgeräts 6 an den Diensterechner 5 zu übermitteln. Anhand der Telefonnummer kann der Diensterechner 5 die Identität des Benutzers des Mobilfunk-Endgeräts 6 feststellen und dessen Kreditwürdigkeit und/oder andere Parameter überprüfen. Im Rahmen des Funktionsblocks 27 kann auch eine zusätzliche Überprüfung der Identität des Benutzers durchgeführt werden. Dazu können Verfahren zur Identitätsprüfung eingesetzt werden, die ähnlich arbeiten wie die in Mobilfunk-Telekommunikations-Netzwerken eingesetzten Verfahren zur Identifizierung des Benutzers eines Mobilfunk-Endgeräts 6. Das Ergebnis des Abgleichs der personenbezogenen Daten wird von dem Diensterechner 5 über die zweite Kommunikationsverbindung 9, das Mobilfunk-Endgerät 6 und die erste Kommunikationsverbindung 7 an die Einrichtung 1 übermittelt.

In einem anschließenden Abfrageblock 28 wird überprüft, ob der Abgleich der personenbezogenen Daten des Benutzers erfolgreich durchgeführt wurde. Falls dies der Fall ist, veranlasst die Einrichtung 1 in einem anschließenden Funktionsblock 29 das Abrechnen des Kaufbetrags, der für die ausgewählte Ware oder die erbrachte Dienstleistung fällig ist. Das Abrechnen des Kaufbetrags erfolgt wiederum über die erste Kommunikationsverbindung 7 und die zweite Kommunikationsverbindung 9 in dem Diensterechner 5. Die erfolgreiche Abrechnung des Kaufbetrags wird der Einrichtung 1 in dem Funktionsblock 30 als Rückmeldung von dem Diensterechner 5 über die zweite Kommunikationsverbindung 9 und die erste Kommunikationsverbindung 7 mitgeteilt.

In einem anschließenden Abfrageblock 31 wird überprüft, ob die Abrechnung des Kaufbetrags erfolgreich durchgeführt wurde. Falls dies der Fall ist, wird in dem anschließenden Funktionsblock 32 die ausgewählte Ware oder Dienstleistung abgegeben bzw. erbracht. In dem vorliegenden Ausführungsbeispiel wird das ausgewählte Getränk über das Auswurffach 2 der Einrichtung 1 abgegeben. Damit ist im Funktionsblock 33 das Ende des erfindungsgemäßen Verfahrens erreicht.

Während des Ablaufs des erfindungsgemäßen Verfahrens wird auch dann zum Ende des Verfahrens bei Funktionsblock 33 verzweigt, falls die Abfrage in dem Abfrageblock 28 ergibt, dass der Abgleich der personenbezogenen Daten des Benutzers des Mobilfunk-Endgeräts 6 nicht erfolgreich durchgeführt wurde, oder falls die Abfrage in dem Abfrageblock 31 ergibt, dass der Kaufbetrag nicht erfolgreich abgerechnet wurde.

## Patentansprüche

1. Verfahren zur Abgabe einer Ware oder zum Erbringen einer Dienstleistung unter Einsatz eines Mobilfunk-Endgeräts (6), **gekennzeichnet durch** die nachfolgenden Schritte:
- Herstellen einer ersten Kommunikationsverbindung (7) zwischen einer Einrichtung (1) zur Abgabe einer Ware oder zum Erbringen einer Dienstleistung und dem Mobilfunk-Endgerät (6) über eine räumlich eng begrenzte Übertragungsstrecke (8);
- Herstellen einer zweiten Kommunikationsverbindung (9) zwischen dem Mobilfunk-Endgerät (6) und einem Diensterechner (5) eines Mobilfunk-Telekommunikations-Netzwerks über eine Mobilfunk-Übertragungsstrecke (10);
- Auswahl einer gewünschten Ware oder Dienstleistung;
- Abgabe der ausgewählten Ware oder Erbringen der ausgewählten Dienstleistung durch die Einrichtung (1); und
- Abrechnen des Kaufbetrags für die ausgewählte Ware oder Dienstleistung zwischen der Einrichtung (1) und dem Diensterechner (5) über die Kommunikationsverbindungen (7, 9).

2. Verfahren nach Anspruch 1, dadurch gekennzeichnet, dass die erste Kommunikationsverbindung (7) zwischen der Einrichtung (1) und dem Mobilfunk-Endgerät (6) über eine akustische Übertragungsstrecke hergestellt wird.

3. Verfahren nach Anspruch 1, dadurch gekennzeichnet, dass die erste Kommunikationsverbindung (7) zwischen der Einrichtung (1) und dem Mobilfunk-Endgerät (6) über eine optische Übertragungsstrecke hergestellt wird.

4. Verfahren nach Anspruch 3, dadurch gekennzeichnet, dass die erste Kommunikationsverbindung (7) zwischen der Einrichtung (1) und dem Mobilfunk-Endgerät (6) über eine Infrarot (IR)-Übertragungsstrecke hergestellt wird.

5. Verfahren nach Anspruch 1, dadurch gekennzeichnet, dass die erste Kommunikationsverbindung (7) zwischen der Einrichtung (1) und dem Mobilfunk-Endgerät (6) über eine Hochfrequenz (HF)-Übertragungsstrecke hergestellt wird.

6. Verfahren nach Anspruch 5, dadurch gekennzeichnet, dass die HF-Übertragungsstrecke nach dem Bluetooth-Standard arbeitet.

7. Verfahren nach Anspruch 1, dadurch gekennzeichnet, dass die erste Kommunikationsverbindung (7) zwischen der Einrichtung (1) und dem Mobilfunk-Endgerät (6) über eine induktive Übertragungsstrecke hergestellt wird.

8. Verfahren nach einem der Ansprüche 1 bis 7, dadurch gekennzeichnet, dass die gewünschte Ware oder Dienstleistung mittels Eingabemittel des Mobilfunk-Endgeräts (6) über die erste Kommunikationsverbindung (7) ausgewählt wird.

9. Verfahren nach einem der Ansprüche 1 bis 8, dadurch gekennzeichnet, dass vor der Abgabe der ausgewählten Ware oder vor dem Erbringen der ausgewählten Dienstleistung eine Identitätsüberprüfung des Benutzers des Mobilfunk-Endgeräts (6) über das Mobilfunk-Endgerät (6) in einer in dem Mobilfunk-Telekommunikations-Netzwerk üblichen Weise durchgeführt wird.

10. Verfahren nach einem der Ansprüche 1 bis 9, dadurch gekennzeichnet, dass zum Abrechnen des Kaufbetrags für die abgegebene Ware oder die erbrachte Dienstleistung zwischen der Einrichtung (1) und dem Diensterechner (5) weitere Informationen bezüglich der ausgewählten Ware oder Dienstleistung von der Einrichtung (1) über die Kommunikationsverbindungen (7, 9) an den Diensterechner (5) übermittelt werden.

11. Mobilfunk-Endgerät (6) zum Einsatz als Mittel zur Abgabe einer Ware oder zum Erbringen einer Dienstleistung im Rahmen des Verfahrens nach einem der Ansprüche 1 bis 10, **gekennzeichnet durch**
- erste Mittel zum Herstellen einer ersten Kommunikationsverbindung (7) zwischen einer Einrichtung (1) zur Abgabe einer Ware oder zum Erbringen einer Dienstleistung und dem Mobilfunk-Endgerät (6) über eine räumlich eng begrenzte Übertragungsstrecke (8);
- zweite Mittel zum Herstellen einer zweiten Kommunikationsverbindung (9) zwischen dem Mobilfunk-Endgerät (6) und einem Diensterechner (5) eines Mobilfunk-Telekomminikations-Netzwerks über eine Mobilfunk-Übertragungsstrecke (10); und
- dritte Mittel zum Empfang von Daten über die räumlich eng begrenzte Übertragungsstrecke (8) und zum Weiterleiten der empfangenen Daten über die Mobilfunk-Übertragungsstrecke (10) bzw. zum Empfang von Daten über die Mobilfunk-Übertragungsstrecke (10) und zum Weiterleiten der empfangenen Daten über die räumlich eng begrenzte Übertragungsstrecke (8).

12. Mobilfunk-Endgerät (6) nach Anspruch 11, dadurch gekennzeichnet, dass die ersten Mittel eine akustische Schnittstelle aufweisen.

13. Mobilfunk-Endgerät (6) nach Anspruch 11, dadurch gekennzeichnet, dass die ersten Mittel eine optische Schnittstelle (11) aufweisen.

14. Mobilfunk-Endgerät (6) nach Anspruch 13, dadurch gekennzeichnet, dass die optische Schnittstelle (11) als eine Infrarot (IR)-Schnittstelle ausgebildet ist.

15. Mobilfunk-Endgerät (6) nach Anspruch 11, dadurch gekennzeichnet, dass die ersten Mittel eine Hochfrequenz (HF)-Schnittstelle aufweisen.

16. Mobilfunk-Endgerät (6) nach Anspruch 15, dadurch gekennzeichnet, dass die HF-Schnittstelle nach einem Bluetooth-Standard arbeitet.

17. Mobilfunk-Endgerät (6) nach Anspruch 11, dadurch gekennzeichnet, dass die ersten Mittel eine induktive Schnittstelle aufweisen.

18. Mobilfunk-Endgerät (6) nach einem der Ansprüche 11 bis 17, dadurch gekennzeichnet, dass das Mobilfunk-Endgerät (6) vierte Mittel zur Auswahl der Ware oder der Dienstleistung über die erste Kommunikationsverbindung (7) aufweist.

19. Mobilfunk-Endgerät (6) nach Anspruch 18, dadurch gekennzeichnet, dass die vierten Mittel als eine Wähl-/ Bedientastatur (13, 14) des Mobilfunk-Endgeräts (6) ausgebildet sind.

20. Mobilfunk-Endgerät (6) nach Anspruch 18, dadurch gekennzeichnet, dass die vierten Mittel als ein berührungssensitiver Bildschirm (12) des Mobilfunk-Endgeräts (6) ausgebildet sind.

21. Mobilfunk-Endgerät (6) nach einem der Ansprüche 11 bis 20, dadurch gekennzeichnet, dass das Mobilfunk-Endgerät (6) als ein Mobiltelefon ausgebildet ist.

22. Einrichtung (1) zur Abgabe einer Ware oder zum Erbringen einer Dienstleistung unter Einsatz eines Mobilfunk-Endgeräts (6), **gekennzeichnet durch**
- fünfte Mittel zum Herstellen einer ersten Kommunikationsverbindung (7) zwischen der Einrichtung (1) und dem Mobilfunk-Endgerät (6) über eine räumlich eng begrenzte Übertragungsstrecke (8);
- sechste Mittel zur Abgabe einer ausgewählten Ware oder zum Erbringen einer ausgewählten Dienstleistung; und
- siebte Mittel zum Abrechnen des Kaufbetrags für die ausgewählte Ware oder Dienstleistung zwischen der Einrichtung (1) und einem Diensterechner (5) eines Mobilfunk-Telekommunikations-Netzwerks über das Mobilfunk-Endgerät (6).

23. Einrichtung (1) nach Anspruch 22, dadurch gekennzeichnet, dass die fünften Mittel eine akustische Schnittstelle aufweisen.

24. Einrichtung (1) nach Anspruch 22, dadurch gekennzeichnet, dass die fünften Mittel eine optische Schnittstelle (3) aufweisen.

25. Einrichtung (1) nach Anspruch 24, dadurch gekennzeichnet, dass die optische Schnittstelle (3) als eine Infrarot (IR)-Schnittstelle ausgebildet ist.

26. Einrichtung (1) nach Anspruch 22, dadurch gekennzeichnet, dass die fünften Mittel eine Hochfrequenz (HF)-Schnittstelle aufweisen.

27. Einrichtung (1) nach Anspruch 26, dadurch gekennzeichnet, dass die HF-Schnittstelle nach dem Bluetooth-Standard arbeitet.

28. Einrichtung (1) nach Anspruch 22, dadurch gekennzeichnet, dass die fünften Mittel eine induktive Schnittstelle aufweisen.

29. Einrichtung (1) nach einem der Ansprüche 22 bis 28, dadurch gekennzeichnet, dass die Einrichtung (1) achte Mittel zum Übermitteln weiterer Informationen bezüglich der ausgewählten Ware oder Dienstleistung von der Einrichtung (1) über das Mobilfunk-Endgerät (6) an den Diensterechner (5) aufweist.

30. Einrichtung (1) nach einem der Ansprüche 22 bis 29, dadurch gekennzeichnet, dass die Einrichtung (1) neunte Mittel zum Steuern des Ablaufs des Verfahrens nach einem der Ansprüche 1 bis 10 aufweist.
